# EUROPÄISCHE PATENTSCHRIFT

(11) **EP 0 545 173 B1**
(45) Veröffentlichungstag und Bekanntmachung des Hinweises auf die Patenterteilung: **06.03.1996**
(21) Anmeldenummer: 92119786.9
(22) Anmeldetag: 20.11.1992
(51) Int. Cl.: C08F 14/26

(54) **Verfahren zur Herstellung von Polymerisaten des Tetrafluorethylens**
Process for preparing tetrafluorethylene polymers
Procédé de préparation des polymères de tétrafluoréthylène

(30) Priorität: 02.12.1991 DE 4139665
(43) Veröffentlichungstag der Anmeldung: 09.06.1993
(73) Patentinhaber: HOECHST AKTIENGESELLSCHAFT, D-65926 Frankfurt am Main (DE)
(72) Erfinder: Mayer, Ludwig, Dr., W-8263 Burghausen (DE); Löhr, Gernot, Dr., W-8269 Burgkirchen (DE)

(56) Entgegenhaltungen:
- DE-A- 2 052 495
- US-A- 2 965 595

## Beschreibung

Die Erfindung betrifft ein Verfahren zur Herstellung von kolloidalen Dispersionen von Polymerisaten des Tetrafluorethylens (TFE) in wäßrigem Medium in Gegenwart von gesättigten fluorierten Kohlenwasserstoffen von nicht mehr als 2 Kohlenstoffatomen und mindestens 1 Wasserstoffatom, von Dispergiermitteln und radikalbildenden Initiatoren.

Aus der US-Patentschrift 2 965 595 ist ein Verfahren zur Polymerisation von TFE im wäßrigen Medium zu kolloidalen hochmolekularen Polymerisaten bekannt, wobei in Gegenwart von Emulgatoren, wasserlöslichen Initiatoren und von gesättigten fluorierten Kohlenwasserstoffen von nicht mehr als 2 Kohlenstoffatomen und mindestens 1 Wasserstoffatom gearbeitet wird. Durch diesen Zusatz soll das Polytetrafluorethylen modifiziert und die Stabilität der Dispersion erhöht werden. Tetrafluorethane werden hierbei nicht genannt.

Es wird erwähnt, daß die gesättigten fluorierten Kohlenwasserstoffe grundsätzlich Kettenübertragungsmittel oder Kettenabbrecher sein können, für das dort beschriebene Verfahren sollen sie aber als Stabilisatoren und nicht als Kettenübertragungsmittel wirken.

Es wurde nun gefunden, daß bei solchen Polymerisationsverfahren das 1,1,1,2-Tetrafluorethan als Kettenübertragungsmittel wirkt und hierbei besondere Vorteile zeigt. Diese Verbindung ist auch unter der Bezeichnung "R134a" bekannt. Überraschenderweise wurde weiterhin gefunden, daß das isomere 1,1,2,2-Tetrafluorethan tatsächlich kein Kettenübertragungsmittel ist, das heißt, daß sein Zusatz keine Auswirkungen auf das Molekulargewicht hat.

Das R134a wird in einer Menge von mindestens 2,5 Mol-%, vorzugsweise von mindestens 3 Mol-% bis etwa 20 Mol-%, bezogen auf das oder die Monomere, vorgelegt. Größere Mengen sind unkritisch.

R134a ist nicht toxisch, nicht karzinogen und nicht teratogen; es ist nicht brennbar und wirkt wegen seiner geringen chemischen Reaktivität als Inertisierungsmittel und kann so Verpuffungen bei der Polymerisation verhindern.

Die Dispersionen werden während der Polymerisation durch R134a stabilisiert, weshalb weniger an teurem Emulgator benötigt wird. Zusätzlich wird der Polymerisationsverlauf verbessert, so daß ein Abfallen der Monomeraufnahme zum Ende der Polymerisation und eine Mikrokoagulatbildung durch kolloidchemische Instabilität vermieden werden können. Es wird so die Reaktionszeit herabgesetzt und die Koagulatmenge sowie Beläge verringert. Eine Klumpenbildung bei der Polymerisation, die zu Explosionen führen kann, wird so vermieden.

Ein besonderer Vorteil ist darin zu sehen, daß im polymeren Molekül keine Verzweigungen gebildet werden und daß das Molekulargewicht kontrolliert eingestellt werden kann. Man erhält so Produkte mit enger Molekulargewichtsverteilung, was wiederum zu einer beträchtlich verringerten Quellneigung beim Extrudieren führt.

Der Zusatz von weiteren Kettenübertragungsmitteln oder Antikoagulantien ist nicht erforderlich, aber nicht ausgeschlossen.

Erfindungsgemäß können Homo- und Copolymerisate des TFE hergestellt werden. Als Comonomere eignen sich perfluorierte olefinische Verbindungen, zum Beispiel Perfluoralkene wie Hexafluorpropen, oder Perfluor-(alkyl-vinyl)-ether wie insbesondere der n-Perfluorpropyl-perfluorvinylether.

Die Polymerisation zu wäßrigen kolloidalen Dispersionen wird in an sich bekannter Weise durchgeführt. Bevorzugt werden Temperaturen von 40 bis etwa 100 °C, insbesondere von 55 bis 80 °C, und Drücke von 4 bis 30 bar, insbesondere 8 bis 20 bar.

Als Dispergiermittel werden die für die Dispersionspolymerisation von Fluorolefinen zu wäßrigen, kolloidalen Dispersionen üblichen oberflächenaktiven, fluorierten Verbindungen eingesetzt. Solche fluorierten Emulgatoren sind insbesondere Verbindungen der allgemeinen Formel Y-Rf-Z-M. Darin sind
- Y =: H, Cl oder F;
- Rf =: die Gruppe Cₐf₂ₐ, worin a = 5 bis 10 ist, oder die Gruppe 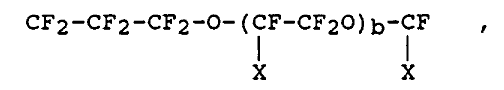 worin X = F oder CF₃ und b = 0 bis 3 ist;
- Z =: die Gruppe COO oder SO₃; und
- M =: ein Alkalimetall oder -N(R)₄, wobei R Wasserstoff oder einen Alkylrest mit 1 bis 2 C-Atomen bedeutet.

Bevorzugt sind die Ammoniumsalze der Perfluoroctansäure und Perfluoroctansulfonsäure. Es können auch Gemische der genannten Emulgatoren eingesetzt werden. Diese Emulgatoren sollen in einer Konzentration von 0,06 bis 1,0 Gew.-%, vorzugsweise von 0,1 bis 0,6 Gew.-%, bezogen auf das wäßrige Polymerisationsmedium, anwesend sein.

Die Polymerisation wird in Gegenwart von radikalbildenden Initiatoren in Gang gesetzt. Als Radikalbildner kommen entweder eine harte energiereiche Strahlung oder wasserlösliche, radikalbildende Initiatoren in Frage, wie sie dem Fachmann für die Polymerisation und Copolymerisation des TFE bekannt sind. Solche Initiatoren sind insbesondere peroxidische Verbindungen. Nur beispielsweise seien hier genannt Wasserstoffperoxid, Natrium- oder Bariumperoxid, Diacylperoxide wie zum Beispiel Diacetylperoxid, Dipropionylperoxid, Dibutyrylperoxid, Dibenzoylperoxid, Benzoylacetylperoxid, Dibernsteinsäureperoxid, Diglutarsäureperoxid und Dilauroylperoxid, weiterhin wasserlösliche Persäuren wie Peressigsäure sowie deren wasserlösliche Salze (insbesondere Ammonium-, Natrium- und Kaliumsalze) oder deren Ester wie zum Beispiel tert.-Butylperoxyacetat und tert.-Butylperoxypivalat. Es können auch die wasserlöslichen Salze, insbesondere Ammonium-, Kalium- und Natriumsalze, von anderen Persäuren wie Peroxymono- und Peroxydischwefelsäure, gegebenenfalls auch der Perphosphorsäure, eingesetzt werden. Geeignet sind ferner Perfluoracylperoxide oder ω-Hydrofluoracylperoxide. Eine weitere Klasse von anwendbaren Initiatoren stellen wasserlösliche Azoverbindungen dar. Als geeignete geläufige Redox-Systeme seien nur beispielhaft genannt die Kombinationen von Peroxodisulfat und Hydrogensulfit oder Disulfit, von Peroxodisulfat und Thiosulfat sowie von Peroxodisulfat und Hydrazin oder Azodicarbonsäureamid (Salze vorzugsweise in Form der Alkali- und insbesondere der Ammoniumsalze). Ferner kann man sich mit Vorteil der Ammonium-, Alkali- oder Erdalkalisalze der Permangan-, Mangansäure oder manganigen Säure bedienen.

Die zugegebene Initiatormenge liegt zwischen 0,03 und 2 Gew.-%, vorzugsweise zwischen 0,05 und 1 Gew.-%, bezogen auf die gesamte Gewichtsmenge der eingesetzten Monomeren. Dabei kann die gesamte Initiatormenge am Beginn der Reaktion der Polymerisationsflotte zugegeben werden. Im Falle größerer Ansätze kann es jedoch zweckmäßig sein, die Gesamtmenge des Initiators kontinuierlich im Verlauf der Polymerisation bis zu einem Umsatz von 70 oder 80 % zuzuschleusen. Ebenso kann man auch einen Teil der Initiatormenge am Beginn vorlegen und den Rest einmalig oder in Teilmengen nachschleusen. Die Zugabe von Beschleunigern, also beispielsweise von löslichen Salzen des Eisens, des Kupfers und des Silbers, kann von Vorteil sein, insbesondere beim Einsatz von Redox-Systemen als Initiatoren.

In den folgenden Beispielen wird die Erfindung näher erläutert. Prozentangaben beziehen sich auf das Gewicht, sofern keine anderen Angaben gemacht sind.

### Beispiel 1

In einem innen emaillierten Polymerisationsreaktor mit einem Gesamtvolumen von 195 l, versehen mit einem Impellerrührer, werden 118 l entsalztes Wasser eingefüllt und darin 185 g Ammoniumperfluoroctanoat (30%ig in Wasser) aufgelöst. Nach Abdichten des Reaktors wird zunächst fünfmal mit Stickstoff und anschließend einmal mit 1,0 bar TFE gespült.

Nach Entspannen und Aufheizen auf 68 °C werden über eine Leitung 4 bar R134a und 420 g Perfluor-n-propylperfluorvinyl-ether (PPVE) unter mäßigem Rühren eingepumpt. Die Rührung wird dann auf 170 U/min erhöht. Sodann wird dem Reaktor über die Gasphase TFE zugeführt, bis der Gesamtdruck von 13,4 bar erreicht ist. Daraufhin startet man die Polymerisation durch Zupumpen von 10,5 g Ammoniumpersulfat, gelöst in 300 ml entsalztem Wasser.

Sobald der Druck zu fallen beginnt, werden über die Gasphase weiteres TFE und PPVE gemäß dem Verbrauch ergänzt, so daß der Gesamtdruck von 13,4 bar aufrechterhalten wird. Die freiwerdende Wärme wird durch Kühlung der Kesselwand abgeführt und so die Temperatur von 68 °C aufrechterhalten.

Nach Einspeisung von 35,7 kg TFE in den Reaktor wird die Monomerenzuführung unterbrochen, der Reaktor entspannt und mehrmals mit N₂ gespült.

Die erhaltene Menge von 152,7 kg Polymerdispersion mit einem Feststoffgehalt von 22,3 % wird am Boden des Reaktors abgelassen. Nach Überführen in ein innen emailliertes 500-l-Ausrührgefäß wird die Dispersion mit 50 l entsalztem Wasser verdünnt, mit 0,8 l konzentrierter Salzsäure versetzt und so lange gerührt, bis sich der Feststoff von der wäßrigen Phase getrennt hat. Das ausgerührte, flockige Pulver wird mit 404 g 1,1,2-Trichlor-trifluorethan (F113) granuliert und dann sechsmal unter kräftigem Durchrühren mit je 300 l entsalztem Wasser gewaschen. Nach Zusatz von 150 l entsalztem Wasser wird das F113 mit Dampf ausgetrieben. Das feuchte Pulver wird 16 Stunden in einem mit Stickstoff überlagerten Trockenschrank bei 290 °C getrocknet. Man erhält so 35,9 kg eines Bipolymeren, das einen Gehalt an PPVE von 3,4 Mol-% und einen Melt-Flow-Index (MFI, bestimmt nach DIN 53 735: Gewichtsauflage 5 kg, 372 °C) von 1,6 aufweist.

### Beispiel 2

Man verfährt wie im Beispiel 1, pumpt jedoch 7 bar R134a und 310 g PPVE ein. Man erhält so ein Bipolymer mit einem Gehalt von 3,1 Mol-% PPVE und einem MFI von 4,8.

### Beispiel 3

Man verfährt ebenfalls entsprechend Beispiel 1, pumpt jedoch 11 bar R134a und 250 g PPVE ein und erhält ein Bipolymer mit einem Gehalt an 3,7 Mol-% PPVE und einem MFI von 10,1.

### Beispiel 4

Das Verfahren entspricht ebenfalls dem von Beispiel 1, es werden jedoch 6 bar R134a und kein PPVE eingepumpt. Das TFE wird bis zu einem Enddruck von 12 bar zugeführt. Man erhält ein Polytetrafluorethylen-Mikropulver mit einem MFI von 0 bis 0,5.

## Patentansprüche

1. Verfahren zur Herstellung von kolloidalen Dispersionen von Polymerisaten des Tetrafluorethylens in wäßrigem Medium in Gegenwart von gesättigten fluorierten Kohlenwasserstoffen von nicht mehr als 2 Kohlenstoffatomen und mindestens 1 Wasserstoffatom, von Dispergiermitteln und radikalbildenden Initiatoren, dadurch gekennzeichnet, daß der gesättigte fluorierte Kohlenwasserstoff 1,1,1,2-Tetrafluorethan ist, das in einer Menge von mindestens 2,5 Mol-%, bezogen auf das oder die Monomere, eingesetzt wird.

2. Verfahren nach Anspruch 1, dadurch gekennzeichnet, daß das 1,1,1,2-Tetrafluorethan in einer Menge von 3 bis 20 Mol-%, bezogen auf das oder die Monomere, vorgelegt wird.

3. Verwendung von 1,1,1,2-Tetrafluorethan als Kettenübertragungsmittel in einer Menge von mindestens 2,5 Mol-%, bezogen auf das oder die Monomere, bei der Herstellung von Polymeren des Tetrafluorethylens in wäßriger kolloidaler Dispersion.

## Claims

1. Process for the preparation of a colloidal dispersion of a tetrafluoroethylene polymer in aqueous medium in the presence of saturated fluorinated hydrocarbons with not more than 2 carbon atoms and at least 1 hydrogen atom, dispersants and free radical-producing initiators, wherein the saturated fluorinated hydrocarbon is 1,1,1,2-tetrafluoroethane which is used in an amount of at least 2.5 mol%, relative to the monomer(s).

2. The process as claimed in claim 1, wherein the 1,1,1,2-tetrafluoroethane is initially introduced in an amount of 3 to 20 mol%, relative to the monomer(s).

3. Use of 1,1,1,2-tetrafluoroethane as a chain-transfer agent in an amount of at least 2.5 mol%, relative to the monomers(s), in the preparation of polymers of tetrafluoroethylene in aqueous colloidal dispersion.

## Revendications

1. Procédé pour préparer des dispersions colloïdales de polymères du tétrafluoréthylène en milieu aqueux, en présence d'hydrocarbures fluorés saturés n'ayant pas plus de 2 atomes de carbone et ayant au moins 1 atome d'hydrogène, de dispersants et d'amorceurs radicalaires, caractérisé en ce que l'hydrocarbure fluoré saturé est le 1,1,1,2-tétrafluoroéthane, que l'on utilise en une quantité d'au moins 2,5 % en moles par rapport au ou aux monomères.

2. Procédé selon la revendication 1, caractérisé en ce que le 1,1,1,2-tétrafluoroéthane est utilisé en une quantité de 3 à 20 % en moles par rapport au ou aux monomères.

3. Utilisation du 1, 1,1, 2-tétrafluoroéthane comme agent de transfert de chaîne en une quantité d'au moins 2,5 % en moles, par rapport au ou aux monomères, lors de la préparation de polymères du tétrafluoréthylène en dispersion colloïdale aqueuse.
